# EUROPÄISCHE PATENTSCHRIFT

(11) **EP 0 576 710 B1**
(45) Veröffentlichungstag und Bekanntmachung des Hinweises auf die Patenterteilung: **19.11.1997**
(21) Anmeldenummer: 92111229.8
(22) Anmeldetag: 02.07.1992
(51) Int. Cl.: G08G 1/0968

(54) **Anordnung zur Datenübertragung**
Arrangement for data transmission
Dispositif pour la transmission de données

(43) Veröffentlichungstag der Anmeldung: 05.01.1994
(73) Patentinhaber: SIEMENS AKTIENGESELLSCHAFT, 80333 München (DE)
(72) Erfinder: Treffer, Gerhard, Dipl.-Ing. (FH), W-8025 Unterhaching (DE)

(56) Entgegenhaltungen:
- EP-A- 0 218 046
- EP-A- 0 256 483

## Beschreibung

Die Erfindung bezieht sich auf eine Anordnung zur Datenübertragung zwischen einem Verkehrssteuergerät und einer am Signalmast einer Verkehrslichtsignalanlage angeordneten Empfangs- und Sendeeinrichtung gemäß dem Oberbegriff des Anspruchs 1.

Eine derartige Anordnung ist bereits aus der EP 0 256 483 Bl bekannt. Dort ist eine Schaltungsanordnung für die Datenübertragung im Basisband beschrieben, bei der über das vorhandene Starkstromkabel vom Verkehrsschaltgerät zu einer ortsfesten Leitbake in einer Verkehrslichtsignalanlage eine wechselseitige Datenübertragung erfolgt. Zur Spannungsversorgung und Datenübertragung werden eine freie Leitung und zwei Rückleiter von den Signalgebern benötigt, wobei eine Rückleitung zum Einschleifen des Übertragers extra aufgetrennt werden muß. Diese bekannte Datenübertragungseinrichtung wurde bisher für Verkehrsschaltgeräte vorgesehen, die im allgemeinen Relaisschalter für die einzelnen Signalgeber aufweist. Eine Datenübertragung beim Schalten der Signalgeberlampen mit Halbleitern wurde damit bisher nicht realisiert. Halbleiterschalter, z.B. Triacs, Thyristoren, Transistoren, werden bei jeder Sinushalbwelle der Netzfrequenz, die im allgemeinen 50 Hz beträgt, geschaltet und stören dabei die Datenübertragung erheblich.

Aufgabe der Erfindung ist es daher, eine oben beschriebene Anordnung dahingehend weiterzubilden, daß die Datenütertragung auf stark gestörten Leitungen sicher möglich ist, wobei der technische Aufwand hierfür noch verringert werden soll.

Diese Aufgabe wird erfindungsgemäß bei einer eingangs beschrieberen Anordnung zur Datenübertragung mit den Merkmalen des kennzeichnenden Teils des Anspruchs 1 gelöst.

Die Erfindung zeigt eine neue Anordnung der Übertrager. Zur Spannungsversorgung und Datenübertragung wird eine freie Leitung und nur eine Rückleitung von den signalgebern benötigt. Dabei ist es von besonderem Vorteil, daß die Rückleitung nicht mehr aufgetrennt werden muß, was die Sicherheit der Lichtsignalanlage erhöht. Ferner wird der übertrager nicht mehr vom Lampenstrom durchflossen. Das bedeutet, daß die übertrager kleiner und preiswerter ausgeführt werden können.

In einer zweckmäßigen Ausgestaltung der Erfindung ist im Verkehrssteuergerät die Sekundärwicklung des Übertragers einerseits an der freien Leitung und andererseits über die Sekundärwicklung eines Netztrafos am Rückleiter angeschlossen. In der Empfancs- und Sendeeinrichtung ist der übertrager mit seiner Primärwicklung einerseits an der freien Leitung und andererseits über einen Kondensator an dem Rückleiter angeschlossen. Wie bereits erwähnt, muß der Rückleiter nicht mehr aufgetrennt werden und über den übertrager für die Datenübertragung fließt kein Lampenstrom. An dem Kondensator in der Empfangs- und Sendeeinrichtung wird die Wechselspannung für die Energieversorgung der Empfangs- und Sendeeinrichtung abgegriffen und im allgemeinen gleichgerichtet.

Weitere Einzelheiten und vorteilhafte Ausgestaltungen der Erfindung ergeben sich aus den weiteren Unteransprüchen und der Beschreibung eines Ausführungsbeispiels und einer möglichen Schaltung für den Sender und Empfänger.

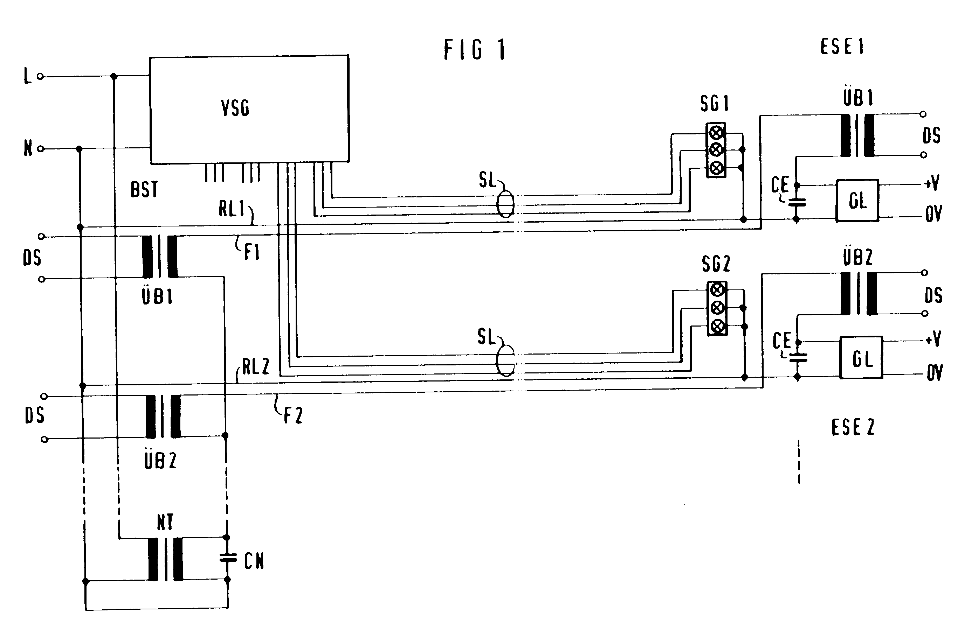

Fig. 1 zeigt eine neue Anordnung der Übertrager ÜB1, ÜB2. Im Verkehrssteuergerät VSG werden über Signalleitungen SL die einzelnen Signalgeber SG1, SG2 geschaltet. Jeder Signalgeber SG1, SG2 besitzt einen eigenen Rückleiter RL1, RL2. Die jeweils noch vorhandene freie Leitung F1, F2 wird für die erfindungsgemäße Anordnung ausgenutzt. Im Verkehrssteuergerät VSG ist ein Bakensteuerteil BST vorgesehen. Von hier werden die Datensignale DS zur jeweiligen Bake, oder ganz allgemein formuliert, zur jeweiligen Empfangs- und Sendeeinrichtung ESE1, ESE2 übertragen. Dazu ist im Verkehrssteuergerät jeweils ein Übertrager ÜB1, ÜB2 und für die Spannungsversorgung ein gemeinsamer Netztransformator NT vorgesehen. Ebenso weist jede Bake zum Ein- und Auskoppeln der Datensignale jeweils einen Übertrager ÜB1, ÜB2 auf. Der jeweilige Rückleiter RL1, RL2 ist im Verkehrssteuergerät VSG am Nulleiter N angeschlossen. Die Sekundärwicklungen der Übertrager ÜB1, ÜB2 im Verkehrssteuergerät sind einerseits jeweils mit der freien Leitung F1, F2 mit der Primärwicklung des jeweiligen Übertragers ÜB1, ÜB2 in der Bake verbunden. Der zweite Anschluß der Primärwicklung dieser Übertrager ist über einen Kondensator CE mit dem jeweiligen Rückleiter RL1;RL2 verbunden. An dem Kondensator CE wird die Versorgungsspannung abgegriffen und gleichgerichtet GL für die Spannungsversorgung der Bake. Für diese Spannungsversorgung ist im Verkehrssteuergerät der Ausgang des Netztrafos NT einerseits mit dem Nulleiter N bzw. den Rückleitern RL1, RL2 verbunden und andererseits mit dem jeweiligen anderen Anschluß des jeweiligen Übertragers ÜB1, ÜB2 im Verkehrssteuergerät VSG. Wie bereits erwähnt, hat diese neue Anordnung den vorteil, daß sowohl für die Spannungsversorgung und Datenübertragung nur eine freie Leitung und nur ein Rückleiter von den Signalgebern benötigt werden.

Die Datenübertragung erfolgt in beiden Richtungen. Die Störfrequenz hängt von der Anstiegszeit des Schalters und von der Länge des Starkstromkabels ab und beträgt ca. 100 kHz bis 1 MHz, d.h. sie liegt im Frequenzbereich cer Basisbandübertragung. Die Sendeleistung kann aus EMY-Gründen nicht erhöht werden. Dieses Problem wird daher durch Trennung der Frequenzen gelöst.

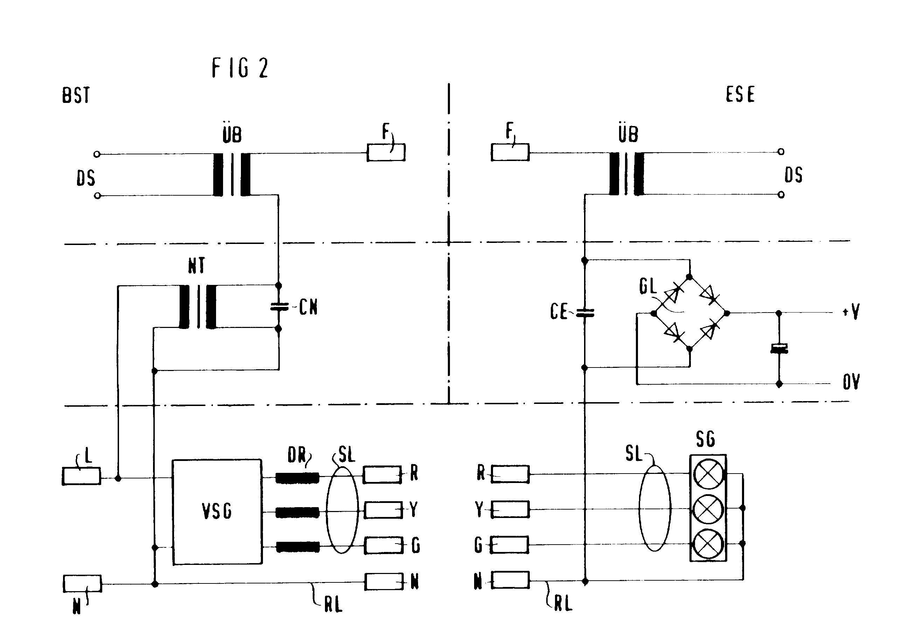

Daher sind - wie in Fig.2 dargestellt - zur Senkung der Störfrequenz Drosseln DR in den Phasenleitungen bzw. Signalleitungen SL für die Signalgeber SG vorgesehen. In Fig.2 ist links das Bakesteuerteil BST dargestellt. Die Datensignale DS gelangen über den Übertrager ÜB zum einen über die freie Leitung F zum Übertrager ÜB in der Empfangs- und Sendeeinrichtung ESE der Bake. Andererseits gelangen die Datensignale über den Nulleiter N bzw. den Rückleiter RL des Signalgebers SG zum Übertrager ÜB in der Bake. Der zweite Ausgang der Sekundärwicklung des Übertragers UB im Bakensteuerteil BST ist mit dem einen Anschluß des Ausgangs des Netztransformators NT verbunden, der zweite Ausgang des Transformators NT ist am Nulleiter N bzw. Rückleiter RL angeschlossen. Der Sekundärwicklung des Netztransformators NT ist ein Kondensator CN parallel geschaltet, über den die Datensignale zum Rückleiter RL gelangen. In die Phasenleitungen bzw. Signalgeberleitungen SL des Verkehrssteuergerätes VSG sind jeweils eine Drossel DR geschaltet. Die Signalleitungen für Rot, Gelb, Grün (R,Y,G) sind wie üblich zum Signalgeber SG geführt. Der Übertrager ÜB in der Bake ESE ist ebenfalls über einen Kondensator CE am Rückleiter RL angeschlossen. An diesem Kondensator wird die Versorgungsspannung abgegriffen und gleichgerichtet (GL) und steht zur Versorgung der Bake zur Verfügung.

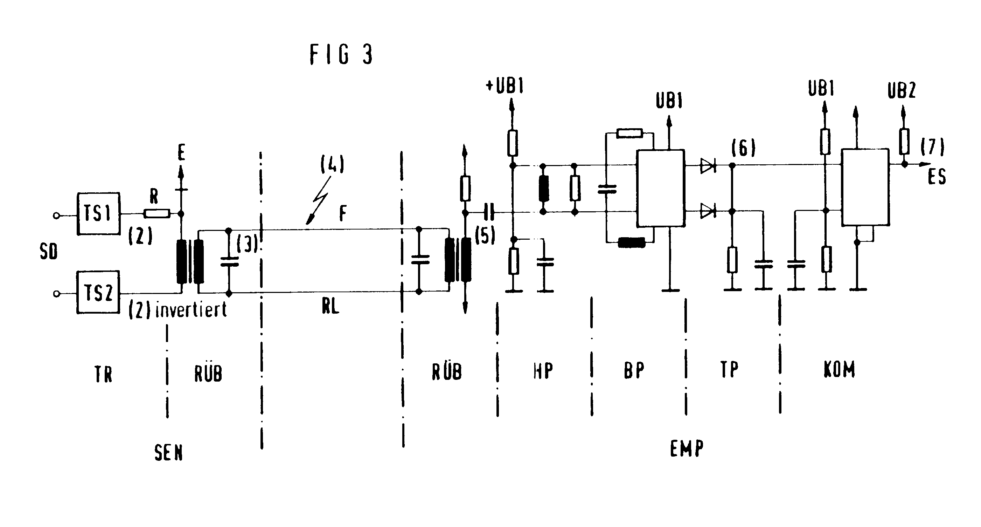

Eine weitere Lösung stellt die Erhöhung der Datenübertragungsfrequenz durch die Trägerfrequenztechnik dar. Dabei kann die Trägerfrequenz innerhalb folgender Grenzen gewählt werden. Die Untergrenze ist höher als die höchste Störfrequenz, die Obergrenze wird durch die Dämpfung der Übertragungsmittel bestimmt. In Fig.3 ist ein Schaltbild eines Senders und eines Empfängers für eine Übertragungsrichtung unter Anwendung der Amplitudenmodulationstechnik dargestellt. In Fig.3 ist links ein Sender SEN mit einem Resonanzübertrager RÜB dargestellt, dem die Sendedaten SD über eine Treiberstufe TR und einem Anpassungswiderstand R zugeführt werden. (Die von der Bake zu empfangenden Daten gelangen ebenfalls über diesen Resonanzübertrager RÜB zum Bakensteuerteil und werden am Resonanzübertrager RÜB abgegriffen und zum Empfänger E geführt.) Vom Resonanzübertrager RÜB gelangen die Daten über den freien Leiter F und den Rückleiter RL zum Resonanzübertrager RÜB in der Empfangs- und Sendeeinrichtung EMP der Bake. Dem Resonanzübertrager RÜB nachgeschaltet ist ein Hochpaß HP oder Bandpaß. Diesem wiederum nachgeordnet ist ein Bandpaß BP, der als Differenzverstärker ausgebildet sein kann. Der Ausgang davon führt über einen Tiefpaß TB, beispielsweise eine Gleichrichteranordnung, auf einen Komparator KOM, an dessen Ausgang die Empfangssignale ES anstehen. An der Sekundärwicklung des Resonanzübertragers RÜB im Empfänger EMP können die Daten eingespeist werden, um von der Bake zum Bakensteuerteil zu senden.

Die eingekoppelte Störspannung, die beim Schalten der Halbleiterschalter entsteht, ist am Empfänger der Verkehrslichtsignalangage am größten, weil der Rückleiter mit Masse verbunden ist, während der Hinleiter durch den Übertrager hochohmig ist. Mit folcenden Maßnahmen kann auf der Empfängerseite das Nutz/Störverhältnis verbessert werden. Die untere Grenzfrequenz ces Übertragers ist der Trägerfrequenz angepaßt, d.h., der induktive Widerstand ist klein gegenüber dem kapazitiven Widerstand der Koppelkapazität. Ein Abschluß der Leitung mit einem Wellenwiderstand minimiert cie Reflexion. Die Übertragung mehrerer Trägerwellen ermöglicht digitale Störunterdrückung von kurzen Störimpulsen oder - wie in Fig.3 dargestellt werden die Stör- und Trägerfrequenz durch Resonanzübertrager Hochpaß und Bandpaß getrennt.

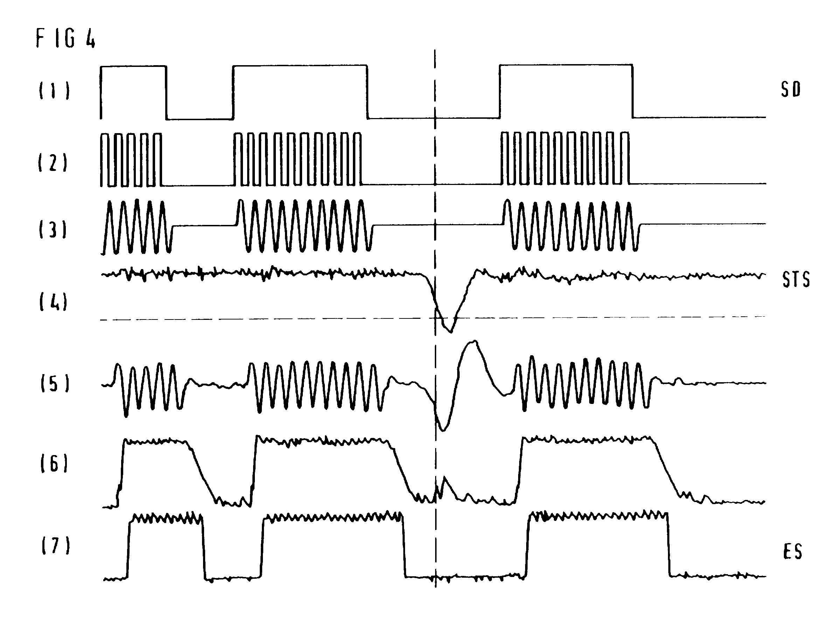

In Fig.4 sind die Signaldaten in einem Diagramm dargestellt, dabei ist gut zu erkennen, wie sich die ursprünglichen Sendedaten SD, mit (1) bezeichnet, aufgrund der Störströme (4) verändern, empfangen und wieder rückgewonnen werden. Die Sendeschaltung besteht aus zwei Treiberstufen TS1 und TS2, die in Verbindung mit dem Anpassungswiderstand R und der Primärwicklung des Resonanzübertragers RÜB eine Brückenschaltung bilden, d.h. das Signal der Treiber- stufe TS2 ist invertiert zum Signal der Treiberstufe TS1. Durch die Brückenschaltung wird die Leitung symmetrisch angesteuert, siehe (5) Fig.4, d.h. die Leitung ist am Ende der Ansteuerung, z.B. durch ein H-Bit, wieder in Rücklage, was bezüglich Nachschwingen und Reflexion vorteilhaft ist. Mit dem Anpassungswiderstand ist die Leitung mit dem entsprechenden Wellenwiderstand abgeschlossen. Nach der Treiberstufe TS1 steht der Träger mit den Sendedaten, mit (2) bezeichnet und dargestellt, an. Das eigentliche Sendesignal (3) gelangt nun am Ausgang des Resonanzübertragers RÜB auf die Übertragungsleitung F,RL, wo die oben erwähnten Störströme STS (4) auftreten. Das gestörte Empfangssignal am Ausgang des Resonanzübertragers RÜB des Empfängers EMP ist mit (5) bezeichnet und in Fig. 4 dargestellt. Darunter ist das Signal gezeigt, das man nach der Filterung erhält, mit (6) bezeichnet (Fig.3), wo es nach der Filterung ansteht. Am Ausgang des Komparators KOM steht das nun wieder rückgewonnene Empfangssignal ES mit (7) bezeichnet an und ist in Fig.4 ebenfalls dargestellt.

## Patentansprüche

1. Anordnung zur Datenübertragung zwischen einem Verkehrssteuergerät (VSG) und einer am Signalmast einer Verkehrslichtsignalanlage angeordneten Empfangs- und Sendeeinrichtung (ESE) unter Verwendung der vorhandenen Signalleitungen (SL) für die Lichtsignalgeber (SG), welche pro Lichtsignalgeber (SG) eine freie Leitung (F) und einen Rückleiter (RL) enthalten, wobei im Verkehrssteuergerät (VSG) ein Übertrager (ÜB) und ein Netztrafo (NT) für die Versorgungsspannung der Empfangs- und Sendeeinrichtung (ESE) und dort ein Übertrager (ÜB) vorgesehen sind,
**dadurch gekennzeichnet,** daß zur Datenübertragung und zur Spannungsversorgung der Empfangsund Sendeeinheit (ESE) lediglich ein freier Leiter (F) und ein Rückleiter (RL) eines Lichtsignalgebers (SG) benötigt werden, wobei im verkehrssteuergerät (VSG) die Sekundärwicklung des Übertragers (ÜB) einerseits an der freien Leitung (F) und andererseits über die Sekundärwicklung eines Netztrafos (NT) am Rückleiter (RL) angeschlossen ist, und wobei in der Empfangs- und Sendeeinrichtung (ESE) der Übertrager (ÜB) mit seiner Primärwicklung einerseits an der freien Leitung (F) und andererseits über einen Kondensator (CE) am Rückleiter (RL) angeschlossen ist, und wobei am Kondensator die Spannungsversorgung der Empfangs- und Sendeeinheit (ESE) abgegriffen wird.

2. Anordnung nach Anspruch 1,
**dadurch gekennzeichnet,** daß zur Sekundärwicklung des Netztrafos (NT) ein weiterer Kondensator (CN) parallel geschaltet ist.

3. Anordnung nach einem der vorhergehenden Ansprüche,
**dadurch gekennzeichnet,** daß die jeweiligen Übertrager als Resonanzübertrager ausgebildet sind.

4. Anordnung nach einem der vorhergehenden Ansprüche,
**dadurch gekennzeichnet,** daß in jeder Signalleitung eine Drossel (DR) angeordnet ist.

5. Anordnung nach einem der vorhergehenden Ansprüche,
**dadurch gekennzeichnet,** daß für die Datenübertragung mehrere Trägerwellen vorgesehen sind.

6. Anordnung nach einem der vorhergehenden Ansprüche,
**dadurch gekennzeichnet,** daß die Trägerfrequenz bzw. -frequenzen höher gewählt sind als die Störfrequenzen.

7. Anordnung nach einem der vorhergehenden Ansprüche,
**dadurch gekennzeichnet,** daß an einem Verkehrssteuergerät mehrere Empfangs- und Sendeeinrichtungen mit jeweils einem Übertrager und je einem Übertrager im Verkehrssteuergerät angeschlossen sind, wobei im Verkehrssteuergerät ein einziger gemeinsamer Netztrafo vorgesehen ist.

8. Anordnung nach einem der vorhergehenden Ansprüche,
**dadurch gekennzeichnet,** daß die Empfangs- und Sendeeinrichtung in einer Bake zur Übertragung von Daten für ein Verkehrsleit- und Informationssystem angeordnet ist.

## Claims

1. Arrangement for data transmission between a traffic controller (VSG) and a receiving and transmitting device (ESE) which is arranged on the signal mast of a traffic light signal installation, using the existing signal lines (SL) for the light signal transmitters (SG), which contain one free line (F) and one return conductor (RL) per light signal transmitter (SG), a transformer (ÜB) and a mains transformer (NT) being provided in the traffic controller (VSG) for the supply voltage of the receiving and transmitting device (ESE), and a transformer (ÜB) being provided there, characterized in that only one free conductor (F) and one return conductor (RL) of a light signal transmitter (SG) are required for data transmission and for supplying voltage to the receiving and transmitting unit (ESE), the secondary winding of the transformer (ÜB) in the traffic controller (VSG) being connected on the one hand to the free line (F) and on the other hand to the return conductor (RL) via the secondary winding of a mains transformer (NT), and, in the receiving and transmitting device (ESE), the primary winding of the transformer (ÜB) being connected on the one hand to the free line (F) and on the other hand to the return conductor (RL) via a capacitor (CE), and the voltage supply for the receiving and transmitting unit (ESE) being tapped off the capacitor.

2. Arrangement according to Claim 1, characterized in that the secondary winding of the mains transformer (NT) has a further capacitor (CN) connected in parallel with it.

3. Arrangement according to one of the preceding claims, characterized in that the respective transformers are designed as resonant transformers.

4. Arrangement according to one of the preceding claims, characterized in that an inductor (DR) is arranged in each signal line.

5. Arrangement according to one of the preceding claims, characterized in that a plurality of carrier waves are provided for data transmission.

6. Arrangement according to one of the preceding claims, characterized in that the carrier frequency or frequencies is or are selected to be higher than the interference frequencies.

7. Arrangement according to one of the preceding claims, characterized in that one traffic controller has a plurality of receiving and transmitting devices connected to it, each having a transformer and in each case one transformer in the traffic controller, a single, common mains transformer being provided in the traffic controller.

8. Arrangement according to one of the preceding claims, characterized in that the receiving and transmitting device is arranged in a beacon for transmitting data for a traffic management and information system.

## Revendications

1. Dispositif pour la transmission de données entre un appareil de commande du trafic routier (VSG) et un dispositif émetteur-récepteur (ESE) monté sur le poteau de signalisation d'une installation de feux de signalisation routière en utilisant les conducteurs de signalisation existants (SL), qui commandent les feux de signalisation (SG) et qui comprennent, par feu de signalisation (SG), un conducteur libre (F) et un conducteur de retour (RL), un transformateur (ÜB) et un transformateur d'alimentation secteur (NT) pour la tension d'alimentation du dispositif émetteur-récepteur (ESE) étant prévus dans l'appareil de commande du trafic routier (VSG), ainsi qu'un transformateur (ÜB) dans le dispositif émetteur-récepteur,
**caractérisé par**
le fait que, pour la transmission de données et pour l'alimentation en tension du dispositif émetteur-récepteur (ESE), seulement un conducteur libre (F) et un conducteur de retour (RL) d'un feu de signalisation (SG) sont nécessaires, l'enroulement secondaire du transformateur (ÜB) étant, dans l'appareil de commande du trafic routier (VSG), raccordé, d'une part, sur le conducteur libre (F) et, d'autre part, sur le conducteur de retour par l'intermédiaire de l'enroulement secondaire d'un transformateur d'alimentation secteur (NT) et le transformateur (ÜB) dans le dispositif émetteur-récepteur (ESE) étant raccordé par son enroulement primaire, d'une part, au conducteur libre (F) et, d'autre part, au conducteur de retour (RL) à travers un condensateur (CE) et l'alimentation en tension du dispositif émetteur-récepteur (ESE) étant prise en parallèle sur ce condensateur.

2. Dispositif selon la revendication 1,
**caractérisé par**
le fait qu'un condensateur supplémentaire (CN) est branché en parallèle sur l'enroulement secondaire du transformateur d'alimentation secteur (NT).

3. Dispositif selon une des revendications précédentes,
**caractérisé par**
le fait que chaque transformateur est constitué d'un transformateur à résonance.

4. Dispositif selon une des revendications précédentes,
**caractérisé par**
le fait qu'une bobine de self (DR) est placée sur chaque conducteur de signalisation.

5. Dispositif selon une des revendications précédentes,
**caractérisé par**
le fait que plusieurs ondes porteuses sont prévues pour la transmission de données.

6. Dispositif selon une des revendications précédentes,
**caractérisé par**
le fait que la ou les fréquences porteuses sont choisies de telle sorte qu'elles sont plus élevées que les fréquences perturbatrices.

7. Dispositif selon une des revendications précédentes,
**caractérisé par**
le fait que plusieurs dispositifs émetteur-récepteur avec chacun un transformateur sont raccordés à un appareil de commande pour le trafic routier et chacun à un transformateur dans l'appareil de commande pour le trafic routier, un seul transformateur d'alimentation secteur étant prévu dans l'appareil de commande du trafic routier.

8. Dispositif selon une des revendications précédentes,
**caractérisé par**
le fait que le dispositif émetteur-récepteur est placé dans une balise pour la transmission de données pour un système de téléguidage et de téléinformation pour le trafic routier.
